# EUROPÄISCHE PATENTANMELDUNG

(11) **EP 3 453 260 A1**
(43) Veröffentlichungstag der Anmeldung: **13.03.2019**
(21) Anmeldenummer: 17189716.8
(22) Anmeldetag: 06.09.2017
(51) Int. Cl.: A22C 11/02, A23B 4/005, B65B 19/34, A23L 13/60, A22C 11/00, A23B 4/10, A23K 10/20, A23K 50/20, A23K 50/40, A23L 3/3418, A23L 3/3445, A23C 13/00, A23L 3/01, A22C 7/00

(54) **VERFAHREN ZUR HERSTELLUNG VON WURST**

(71) Anmelder: 3vM Beteiligungsgesellschaft, 07381 Langenorla (DE)
(72) Erfinder: VON MENGES, JOACHIM, 07381 Langenorla (DE)
(74) Vertreter: Uexküll & Stolberg

(57) **Zusammenfassung**

Die vorliegende Erfindung betrifft Verfahren zur Herstellung einer Wurst, das Schritte umfasst bei dem man:
(a) eine Zusammensetzung in eine Folie einbringt, die Fleisch und ein Lebensmittelgas umfasst, wobei der Anteil des Lebensmittelgases 1 bis 20 Vol.-% der Summe der Zusammensetzung in der Folie beträgt; und
(b) die Mischung aus Fleisch und Lebensmittelgas in der Folie sterilisiert.

Die vorliegende Erfindung betrifft ferner keimfreie Wurst, die eine Zusammensetzung aus Fleisch und einem Lebensmittelgas in einer Folie umfasst, dadurch gekennzeichnet, dass der Anteil des Lebensmittelgases 1 bis 20 Vol.-% der Summe der Bestandteile in der Folie beträgt. Die keimfreie Wurst ist insbesondere durch die genannten Schritte erhältlich.

## Beschreibung

### Verfahren zur Herstellung von Wurst

Die vorliegende Erfindung betrifft Verfahren zur Herstellung von Wurst, bei denen man das Fleisch und die weiteren im Stand der Technik üblichen Bestandteile zur Herstellung einer Wurst zusammen mit einem Lebensmittelgas in eine Folie einführt und die Mischung in der Folie sterilisiert.

### Technischer Hintergrund

Würste werden in verschiedenen Produktvarianten als Nahrungsmittel für Menschen und auch in der Tiernahrung, insbesondere auch als Hunde- und Katzenfutter, eingesetzt. Würste erfreuen sich, aufgrund des geringen Verpackungsvolumens, einer wachsenden Beliebtheit.

Im Stand der Technik ist es üblich Würste zu sterilisieren, indem man die üblichen Bestandteile zur Herstellung einer Wurst, insbesondere Fleisch und Wasser, in eine Folie einführt, die Folie an beiden Enden verschließt und bei einer Temperatur von mehr als 120 °C und einem Druck zwischen 4,8 und 7,5 bar sterilisiert. Der Wasseranteil in der Wurst beträgt dabei üblicherweise zwischen 65% und 78 % und erfordert den hohen Gegendruck. Das Wasser dehnt sich bei der für die Sterilisation üblichen Temperatur aus und diese Ausdehnung beträgt abhängig von der Qualität des Wassers zwischen 3,8 und 5,2 %. Durch den hohen Gegendruck wird eine Ausdehnung des Wassers durch Kompression der anderen Inhaltsstoffe in der Wurst bewirkt.

Wenn der Druck nicht ausreicht und sich das Wasser in der Wurst ausdehnt, dann wird die Folie überdehnt. Als Folge kann die Sauerstoffbarriere der Aluminiumskaschierung zerstört werden, was zur Faltenbildung der Folie im Umfang der Überdehnung nach dem Erkalten des Produktes führt. Die Überdehnung der Folie kann anschließend zu erheblichen Problemen bei der Sterilisation führen, da die Funktion der Folie als Sauerstoffbarriere beeinträchtigt ist.

Diese Probleme werden durch die vorliegende Erfindung gelöst.

### Gegenstand der Erfindung

Die vorliegende Erfindung stellt demgemäß Verfahren zur Herstellung einer Wurst zur Verfügung, Schritte umfassend, bei denen man:
(a) eine Zusammensetzung in eine Folie einbringt, die Fleisch und ein Lebensmittelgas umfasst, wobei der Anteil des Lebensmittelgases 1 bis 20 Vol.-% der Summe der Zusammensetzung in der Folie beträgt; und
(b) die Mischung aus Fleisch und Lebensmittelgas in der Folie sterilisiert.

Mit den erfindungsgemäßen Verfahren ist es erstmals möglich einen Wurstdarm mit Fleisch straff zu befüllen und zu sterilisieren ohne dass die Gefahr der Überdehnung des Darmes besteht. Dabei wird die Wurstfolie wird nach im Stand der Technik üblichen Verfahren von der Rolle oder vom ausgeformten Darm verarbeitet. Man kann beispielsweise eine Flachfolie von einer Rolle abnehmen und über eine Formschulter in eine Wurstform bringen. Die Enden der Flachfolie werden ebenfalls nach im Stand der Technik üblichen Verfahren miteinander thermisch oder mit Ultraschall versiegelt und gegebenenfalls beschriftet. Nach der Ausformung des Wurstdarms wird dieser mit Fleisch, Brät, Gewürzen, Wasser und dem Lebensmittelgas befüllt und an beiden Enden luftdicht verschlossen, vorzugsweise mit einem Aluminium- oder Stahlclip. Der Fülldruck der Wurst und die Füll-Geschwindigkeit sind an dem üblicherweise eingesetzten Vakuumfüller oder ähnlichen Produktpumpen stufenlos und präzise einstellbar. Die Mischung aus Fleisch und Lebensmittelgas wird in der Folie nach im Stand der Technik üblichen Verfahren sterilisiert. Die Gegenwart des Lebensmittelgases verhindert eine Überdehnung der Folie bei der Sterilisation und eine Verfärbung des Fleisches.

Der Anteil des Lebensmittelgases an der Zusammensetzung in der Folie wird üblicherweise bei einem Fülldruck von 1 bar bestimmt.

Die Verfahren der vorliegenden Erfindung umfassen Verfahren, bei denen Fleisch und das Lebensmittelgas als getrennte Bestandteile oder als Mischung in die Folie eingebracht werden. Das Fleisch und das Lebensmittelgas können bei getrennter Einbringung in die Folie zudem gleichzeitig oder nacheinander eingebracht werden können.

Das Verfahren der vorliegenden Erfindung ist zur Herstellung beliebiger Würste geeignet. Dementsprechend kann die Wurst Fleisch Brät, Wurstbrät, Hackfleisch, fein gekuttertes Fleisch, eine Mischung verschiedener Fleischformen oder eine Zusammensetzung enthalten, welche Fleisch und Gewürze zur Wurstherstellung umfasst.

Im Rahmen der erfindungsgemäßen Verfahren können beliebige weitere Bestandteile in die Folie eingebracht werden, die zur Wurstherstellung üblich sind, wie Wasser, Gemüse, Obst, Brühe oder Gewürze.

Im Rahmen der vorliegenden Erfindung wird ein Lebensmittelgas verwendet. Dabei kann es sich um beliebige Gase handeln, welche für die Herstellung von Lebens- und Futtermitteln üblicherweise genutzt werden, wie beispielsweise Luft, Stickstoff, Sauerstoff, Kohlendioxid, Argon, Distickstoffmonoxid, Helium, Wasserstoff oder eine Mischung dieser Gase.

Bei der Folie handelt es sich um eine im Stand der Technik übliche Folie zur Herstellung von Wurst.

In den erfindungsgemäßen Verfahren zur Herstellung einer Wurst beträgt der Anteil des Lebensmittelgases an der Summe der Bestandteile in der Folie 1 bis 20 Vol.-% der Summe der Zusammensetzung, vorzugsweise 5 bis 10 Vol.-%, wobei 7 bis 13 Vol.-% besonders bevorzugt sind.

In den erfindungsgemäßen Verfahren zur Herstellung einer Wurst können beliebige im Stand der Technik übliche Verfahren zur Sterilisierung verwendet werden. Es können beispielsweise übliche Autoklaven verwendet werden. Im Rahmen der vorliegenden Erfindung ist es jedoch bevorzugt, dass die Sterilisation:
(a) bei einer Temperatur von mehr als 120 °C erfolgt, vorzugsweise bei einer Temperatur von 121 °C bis 127 °C erfolgt; und
(b) bei einem Druck von 1,5 bis 4 bar, vorzugsweise einem Druck von 2,5 bis 3,7 bar erfolgt.

Gemäß einer weiteren Ausführungsform der Erfindung sind die Verfahren zur Herstellung einer Wurst dadurch gekennzeichnet, dass die Folie zwischen Schritt (a) und (b) an mindestens einem Ende, vorzugsweise an beiden Enden, luftdicht verschlossen wird.

In einer bevorzugten Ausführungsform stellt die Erfindung Verfahren zur Herstellung einer Wurst zur Verfügung, bei denen man
(a) eine Zusammensetzung in eine Folie einbringt, die Fleisch und ein Lebensmittelgas umfasst, wobei der Anteil des Lebensmittelgases 5 bis 20 Vol.-% der Summe der Zusammensetzung in der Folie beträgt, die Folie an beiden Enden luftdicht verschließt; und
(b) die Mischung aus Fleisch und Lebensmittelgas in der Folie bei einer Temperatur von 121 °C bis 127 °C und bei einem Druck von 2,5 bis 3,7 bar sterilisiert.

Entsprechende Würste eignen sich unter anderem als Tierfutter und werden vorzugsweise als Katzen- oder Hundefutter ausgestaltet.

In einem anderen Aspekt betrifft die vorliegende Erfindung keimfreie Wurst, die eine Zusammensetzung aus Fleisch und einem Lebensmittelgas in einer Folie umfasst, dadurch gekennzeichnet, dass der Anteil des Lebensmittelgases 1 bis 20 Vol.-% der Summe der Bestandteile in der Folie beträgt.

Die keimfreie Wurst der vorliegenden Erfindung ist insbesondere dadurch gekennzeichnet, dass sie nach einem der oben genannten Verfahren erhältlich ist.

Gemäß einer Ausführungsform stellt die vorliegende Erfindung eine Wurst zur Verfügung, die durch ein Verfahren erhältlich ist, das Schritte umfasst, bei denen man
(a) eine Zusammensetzung in eine Folie einbringt, die Fleisch und ein Lebensmittelgas umfasst, wobei der Anteil des Lebensmittelgases 5 bis 20 Vol.-% der Summe der Zusammensetzung in der Folie beträgt, die Folie an beiden Enden luftdicht verschließt; und
(b) die Mischung aus Fleisch und Lebensmittelgas in der Folie bei einer Temperatur von 121 °C bis 127 °C und bei einem Druck von 2,5 bis 3,7 bar sterilisiert.

In einer entsprechenden Ausführungsform betrifft die Erfindung Tierfutter, vorzugsweise Katzen- oder Hundefutter, das aus einer der hier genannten Würste besteht.

In einer weiteren Ausführungsform stellt die vorliegende Erfindung eine Vorrichtung zur Herstellung von Wurst zur Verfügung, die dadurch gekennzeichnet ist, dass die Vorrichtung zwei Rohre für die Füllung einer Folie umfasst, wobei das eine Rohr so ausgestaltet ist, dass es eine Füllung der Folie mit Fleisch ermöglicht, und das andere Rohr so ausgestaltet ist, dass es eine Füllung der Folie mit einem Lebensmittelgas ermöglicht. Dabei kann es sich um eine für die Wurstherstellung übliche Vorrichtung handeln, die dahingehend verändert wurde, dass eine Füllung der Folie mit Fleisch und einem Lebensmittelgas ermöglicht wird.

In einer Ausführungsform ist die Vorrichtung zur Herstellung der Wurst so ausgestaltet, dass beide Rohre Edelstahlrohre sind und das Rohr für die Füllung des Fleisches einen inneren Durchmesser von 10 bis 50 mm aufweisen, vorzugsweise einen inneren Durchmesser von 25 bis 35 mm, und das Rohr für die Füllung des Lebensmittelgases einen inneren Durchmesser von 1 bis 4 mm aufweisen, vorzugsweise einen inneren Durchmesser von 2,5 bis 3,5 mm.

Die Vorrichtung zur Herstellung von Wurst kann so ausgestaltet werden, dass eine gleichzeitige Füllung der Folie mit Fleisch und Lebensmittelgas über getrennte Rohre erfolgen kann.

Gemäß einer besonders bevorzugten Ausführungsform ist Vorrichtung zur Herstellung einer Wurst so ausgestaltet, dass das Rohr für die Füllung des Lebensmittelgases innerhalb des Rohrs für die Füllung des Fleisches angeordnet ist.

In einer weiteren Ausführungsform ist die Vorrichtung zur Herstellung einer Wurst so ausgestaltet, dass die Vorrichtung so ausgestaltet ist, dass die Folie nach der Füllung mit einer Zusammensetzung, die Fleisch und Lebensmittelgas umfasst, in der Vorrichtung an mindestens einem Ende, vorzugsweise an beiden Enden, luftdicht verschlossen wird.

Der vorliegenden Erfindung liegen Versuche zugrunde, in denen gezeigt werden konnte, dass abhängig vom Wurst Durchmesser, der Außenfläche der Wurst und des Kochprogramms eine Zugabe von Luft oder Lebensmittelgas in einem Menge von 1-15 % des Wurstvolumens notwendig und ausreichend sind, um die oben beschriebene Aufgabe der Überdehnung der Wurst zu verhindern. Bezogen auf eine 200 g Wurst kann das bedeuten, dass zwischen 7 und 15 ml Luft oder Gas in die Wurst zuzugeben sind. Die genaue Menge an Luft oder Gas wird am Ende durch die Rezeptur, die enthalten Gemüse und den Anteil an Feuchtigkeit im Produkt bestimmt.

Um die Zugabe von Luft dosiert und genau zu erreichen, kann das Füllrohr so ausgestaltet werden, dass auf der ganzen Länge des Füllrohres ein weiteres Rohr eingebaut wird, dass am Ende des ursprünglichen Füllrohres endet. An dieses Luftfüllrohr wird auf der hinten liegenden Seite eine Apparatur bestehend aus zwei Zylindern oder einem Zylinder und einem Servermotor angebracht. Über den Zylinder kann die Menge und der Druck des zugeführten Gases oder der zugeführten Luft genau definiert werden. Beim Vorfahren des Zylinders wird diese Luft durch das Luftfüllrohr in die Wurst gegeben. Entsprechende Rückschlagklappen verhindern, dass der Luftdruck rückwärts entweicht oder das Wurstbrät in das Luftfüllrohr eintritt.

Der Prozessablauf für das Befüllen von Würsten sieht gemäß einer Ausführungsform in der modifizierten Wurstmaschine wie folgt aus:
Abrollen der Flachfolie, Ausformen über Formschulter zu Wurst, versiegeln der Folie, Anbringen Startclip, Einpumpen der ermittelten Luft oder Gasmenge bei gleichzeitigem Füllen der Folie mit Brät, gleichzeitiges Anbringen des Schluss- Clip und des Startclips der Folgewurst, gegebenenfalls Trennen der gefüllten Wurst von der Folgewurst durch Durchtrennen der Plastikverpackung.

Dadurch dass die Luft oder das Gas zu Beginn des Prozesses der Wurstfüllung beim Hochfahren des Vakuumfüller oder der Pumpe dazugegeben wird, wird diese durch das nachströmende Brät daran gehindert durch das Füllrohr rückwärts zu entweichen.

## Patentansprüche

1. Verfahren zur Herstellung einer Wurst, Schritte umfassend bei denen man:
(a) eine Zusammensetzung in eine Folie einbringt, die Fleisch und ein Lebensmittelgas umfasst, wobei der Anteil des Lebensmittelgases 1 bis 20 Vol.-% der Summe der Zusammensetzung in der Folie beträgt; und
(b) die Mischung aus Fleisch und Lebensmittelgas in der Folie sterilisiert.

2. Verfahren zur Herstellung einer Wurst gemäß Anspruch 1, **dadurch gekennzeichnet, dass** der Anteil des Lebensmittelgases an der Zusammensetzung in der Folie bei einem Fülldruck von 1 bar bestimmt wird.

3. Verfahren zur Herstellung einer Wurst gemäß Anspruch 1 oder 2, **dadurch gekennzeichnet, dass** das Fleisch und das Lebensmittelgas als getrennte Bestandteile oder als Mischung in die Folie eingebracht werden, wobei das Fleisch und das Lebensmittelgas bei getrennter Einbringung in die Folie gleichzeitig oder nacheinander eingebracht werden können.

4. Verfahren zur Herstellung einer Wurst gemäß einem der Ansprüche 1 bis 3, **dadurch gekennzeichnet, dass** das Fleisch Brät, Wurstbrät, Hackfleisch, fein gekuttertes Fleisch, eine Mischung verschiedener Fleischformen oder eine Zusammensetzung ist, die Fleisch und Gewürze zur Wurstherstellung umfasst.

5. Verfahren zur Herstellung einer Wurst gemäß einem der Ansprüche 1 bis 4, **dadurch gekennzeichnet, dass** das Lebensmittelgas Luft, Stickstoff, Sauerstoff, Kohlendioxid, Argon, Distickstoffmonoxid, Helium, Wasserstoff oder eine Mischung dieser Gase ist.

6. Verfahren zur Herstellung einer Wurst gemäß einem der Ansprüche 1 bis 5, **dadurch gekennzeichnet, dass** der Anteil des Lebensmittelgases an der Summe der Bestandteile in der Folie 5 bis 15 Vol.-%, vorzugsweise 7 bis 13 Vol.-% beträgt.

7. Verfahren zur Herstellung einer Wurst gemäß einem der Ansprüche 1 bis 6, **dadurch gekennzeichnet, dass** die Sterilisation:
(a) bei einer Temperatur von mehr als 120 °C erfolgt, vorzugsweise bei einer Temperatur von 121 °C bis 127 °C erfolgt; und
(b) bei einem Druck von 1,5 bis 4 bar, vorzugsweise einem Druck von 2,5 bis 3,7 bar erfolgt.

8. Verfahren zur Herstellung einer Wurst gemäß einem der Ansprüche 1 bis 7, **dadurch gekennzeichnet, dass** die Folie zwischen Schritt (a) und (b) an mindestens einem Ende, vorzugsweise an beiden Enden, luftdicht verschlossen wird.

9. Keimfreie Wurst, die eine Zusammensetzung aus Fleisch und einem Lebensmittelgas in einer Folie umfasst, **dadurch gekennzeichnet, dass** der Anteil des Lebensmittelgases 1 bis 20 Vol.-% der Summe der Bestandteile in der Folie beträgt.

10. Keimfreie Wurst, **dadurch gekennzeichnet, dass** die Wurst nach einem Verfahren gemäß einem der Ansprüche 1 bis 8 erhältlich ist.

11. Vorrichtung zur Herstellung von Wurst, **dadurch gekennzeichnet, dass** die Vorrichtung zwei Rohre für die Füllung einer Folie umfasst, wobei das eine Rohr so ausgestaltet ist, dass es eine Füllung der Folie mit Fleisch ermöglicht, und das andere Rohr so ausgestaltet ist, dass es eine Füllung der Folie mit einem Lebensmittelgas ermöglicht.

12. Vorrichtung zur Herstellung von Wurst gemäß Anspruch 11, **dadurch gekennzeichnet, dass** beide Rohre Edelstahlrohre sind und das Rohr für die Füllung des Fleisches einen inneren Durchmesser von 10 bis 50 mm aufweist, vorzugsweise einen inneren Durchmesser von 25 bis 35 mm, und das Rohr für die Füllung des Lebensmittelgases einen inneren Durchmesser von 1 bis 4 mm aufweist, vorzugsweise einen inneren Durchmesser von 2,5 bis 3,5 mm.

13. Vorrichtung zur Herstellung von Wurst gemäß Anspruch 11 oder 12, **dadurch gekennzeichnet, dass** die Vorrichtung so ausgestaltet ist, dass eine gleichzeitige Füllung der Folie mit Fleisch und Lebensmittelgas über getrennte Rohre erfolgen kann.

14. Vorrichtung zur Herstellung von Wurst gemäß einem der Ansprüche 11 bis 13, **dadurch gekennzeichnet, dass** das Rohr für die Füllung des Lebensmittelgases innerhalb des Rohrs für die Füllung des Fleisches angeordnet ist.

15. Vorrichtung zur Herstellung von Wurst gemäß einem der Ansprüche 11 bis 13, **dadurch gekennzeichnet, dass** die Vorrichtung so ausgestaltet ist, dass die Folie nach der Füllung mit einer Zusammensetzung, die Fleisch und Lebensmittelgas umfasst, in der Vorrichtung an mindestens einem Ende, vorzugsweise an beiden Enden, luftdicht verschlossen wird.
